# EUROPEAN PATENT SPECIFICATION

(11) **EP 2 684 637 B1**
(45) Date of publication and mention of the grant of the patent: **06.09.2017**
(21) Application number: 12793489.1
(22) Date of filing: 15.05.2012
(51) Int. Cl.: B23K 26/20, B23K 26/32, B23K 103/16, B23K 103/20

(54) **LASER WELDING COMPONENT AND METHOD FOR MANUFACTURING SAME**
LASERSCHWEISSKOMPONENTE UND HERSTELLUNGSVERFAHREN DAFÜR
ÉLÉMENT DE SOUDAGE AU LASER ET SON PROCÉDÉ DE FABRICATION

(30) Priority: 30.05.2011 JP 2011119980
(43) Date of publication of application: 15.01.2014
(73) Proprietor: Panasonic Intellectual Property Management Co., Ltd., Osaka-shi, Osaka 540-6207 (JP)
(72) Inventor: NISHIKAWA, Yukio, Osaka 540-6207 (JP); TANAKA, Tomomi, Osaka 540-6207 (JP); ITOI, Toshiki, Osaka 540-6207 (JP); KOBAYASHI, Yoshiaki, Osaka 540-6207 (JP)
(74) Representative: Schwabe - Sandmair - Marx
(86) International application number: PCT/JP2012/003158
(87) International publication number: WO 2012/164839

(56) References cited:
- WO-A1-02/43913
- WO-A1-2006/016441
- JP-A- 59 092 189
- JP-A- 2006 088 175
- JP-A- 2008 023 562
- JP-A- 2010 094 701

## Description

### Technical Field

The present invention relates to a laser-joined component including dissimilar metal plates having different melting points and a manufacturing method thereof

### Background Art

A conventional laser-joined component including dissimilar metal plates and a manufacturing method thereof include overlaying a material having a lower melting point on a lower surface of a material having a higher melting point and irradiating an upper surface of the material having the higher melting point with a laser, with an output value of the laser so high that the material having the higher melting point melts and the melt liquid reaches a certain depth of the material having the lower melting point in a wedge-shape (for example, see PTL 1). FIG. 14 is a cross-sectional view of a joined part in a conventional laser-joined component described in PTL 1 and a manufacturing method thereof. In FIG. 14, material 1 having a higher melting point is irradiated with a laser such that melt liquid 3 of material 1 is melt into wedge-shaped region 4 of a given depth inside material 2 having a lower melting point, penetrating an intermetallic compound,

In addition, in the conventional laser-joined component and the manufacturing method thereof, dissimilar metal plates overlaid are simultaneously irradiated with a laser (for example, see PTL 2).

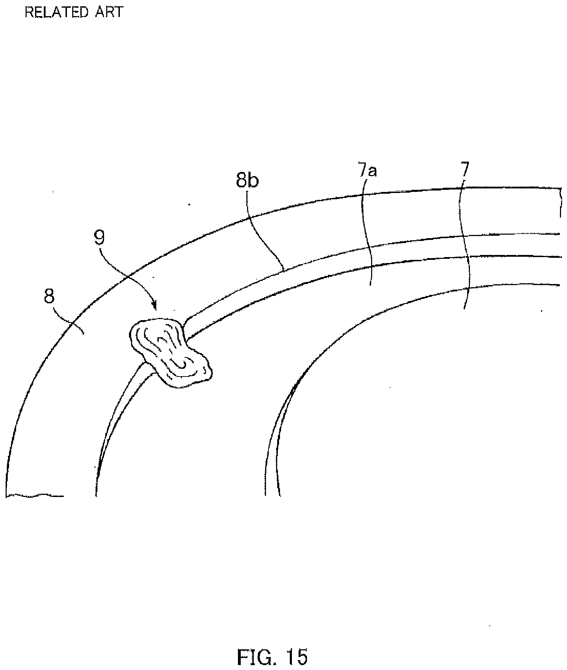

FIG. 15 is a schematic view of a conventional laser-joined component and a manufacturing method thereof described in PTL 2. In FIG 15, tip 8b of crimped part of safety valve apparatus 8 made of aluminum-based metal having a lower melting point and flange part 7a of battery case lid 7 made of iron-based metal having a higher melting point are irradiated with a laser at the same time. As a result, the aluminum-based metal melts to a certain depth, while a surface of the iron-based metal melts due to the difference in melting points. Consequently, melt aluminum metal 9 flows due to gravity, flowing into melt iron metal (flange part 7a of battery case lid 7), covering part of the surface or the entire surface. The flown aluminum metal and the iron metal in contact with the aluminum metal are merged.

However, with the conventional technology, there is a problem that the necessary joining cannot be achieved when the laser irradiation can be performed only on a metal plate having a lower melting point due to limitation of the product structure.

As a method for solving the problem described above, PTL 3 discloses a technique in which two dissimilar metal plates, that is, a first metal plate and a second metal plate having different melting points are overlaid with each other, and spots of fused parts are formed by irradiating the upper surface of the second metal plate having the lower melting point with a laser, for example. However, the influence of heat on the lower surface of the first metal plate having the higher melting point has not been considered. Accordingly, the material placed under the lower surface of the first metal plate is limited. In addition, a problem with regard to the joining strength between the two dissimilar metal plates was left unsolved.

### Citation List

### Patent Literature

PTL 1: Japanese Patent Application Laid-Open No. 2007-136489
PTL 2: Japanese Patent Application Laid-Open No. 2003-187773
PTL 3: United Stated Patent Application Publication No. 2009/0223940

### Summary of Invention

### Technical Problem

The present invention has been conceived in order to solve the problems, and it is an object of the present invention to provide a manufacturing method of a laser-joined component that allows joining dissimilar metal plates having different melting points, including irradiating the metal having a lower melting point with laser. It is another object of the present invention to provide a manufacturing method of a laser-joined component, capable of preventing the increase in the temperature on the lower surface of the metal having a higher melting point. It is still another object of the present invention to improve the joining strength between dissimilar metal plates of a laser-joined component.

### Solution to Problem

The first aspect of the present invention is a laser-joined component according to claim 1.

The second aspect of the present invention is a method for manufacturing a laser-joined component according to claim 11.

### Advantageous Effects of Invention

As described above, according to the laser-joined component and the manufacturing method thereof according to the present invention, when joining overlaid dissimilar metal plates having different melting points, the metal plates can be joined by irradiating the metal having the lower melting point with laser. And further, it also becomes possible to prevent the temperature in the lower surface of the metal having the higher melting point from increasing. In addition, the joining strength between dissimilar metal plates can be improved.

### Brief Description of Drawings

FIG. 1A is a top view of a laser-joined component according to Embodiment 1;
FIG. 1B is a cross-sectional view of a laser-joined component according to Embodiment 1;
FIG. 2 is a conceptual view of configurations of a laser-joined component and a manufacturing apparatus used in a method for manufacturing the laser-joined component according to Embodiment 1;
FIG. 3A is a cross-sectional schematic view of a joining process in a method for manufacturing a laser-joined component according to Embodiment 1;
FIG. 3B is a schematic view of a joining process in a method for manufacturing a laser-joined component according to Embodiment 1;
FIG. 4 is a cross-sectional image of an area in the proximity of a joined part of the laser-joined component manufactured in Example of Embodiment 1;
FIG. 5 is a schematic view of an area in the proximity of the joined part of the laser-joined component manufactured in Example of Embodiment 1;
FIG. 6A is a top view of a laser-joined component according to Variation of Embodiment 1;
FIG. 6B is a cross-sectional view of a laser-joined component according to Variation of Embodiment 1;
FIG. 7A is a cross-sectional schematic view of a joining process in a method for manufacturing a laser-joined component according to Variation of Embodiment 1;
FIG. 7B is a schematic view of a joining process in a method for manufacturing a laser-joined component according to Variation of Embodiment 1;
FIG. 8 is a conceptual view illustrating a laser-joined component and a process for manufacturing a laser-joined component (manufacturing apparatus) according to Embodiment 2;
FIG. 9A is a cross-sectional schematic view of a joining process in a method for manufacturing a laser-joined component according to Embodiment 2;
FIG. 9B is a schematic view of a joining process in a method for manufacturing a laser-joined component according to Embodiment 2;
FIG. 10 is a cross-sectional image of an area in the proximity of joined part in the laser-joined component according to Embodiment 2;
FIG. 11 is a cross-sectional image of an area in the proximity of joined part in the laser-joined component according to Embodiment 2;
FIG. 12 is an image illustrating a trace of melting on an upper surface of the second metal plate of the laser-joined component as Reference Example;
FIG. 13 is a cross-sectional image of a joined part in a laser-joined component as Reference Example;

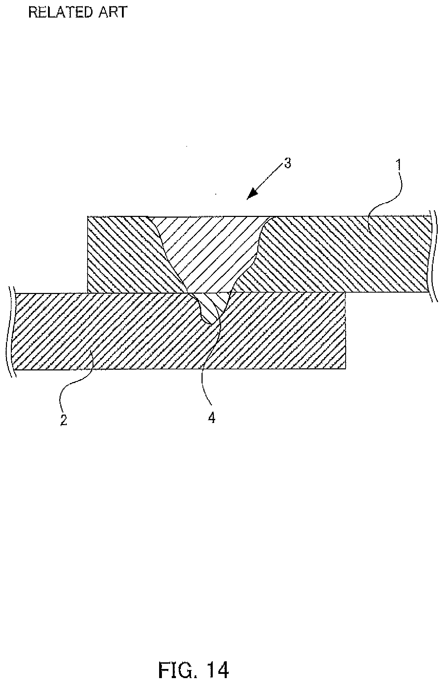

FIG. 14 is a cross-sectional view of a joined part in a conventional laser-joined component and manufacturing method thereof disclosed in PTL 1; and
FIG. 15 is a surface view of a conventional laser-joined component and manufacturing method thereof disclosed in PTL 2.

### Description of Embodiments

Although the present invention will be described with reference to Embodiments, the present invention is not limited to the following Embodiments. The same or similar reference numerals are assigned to components having the same or similar functions, and the description for the components is omitted. Note that the diagrams are schematic. Accordingly, specific dimensions and others shall be determined referring to the following description.

### (Embodiment 1) (Laser-joined component)

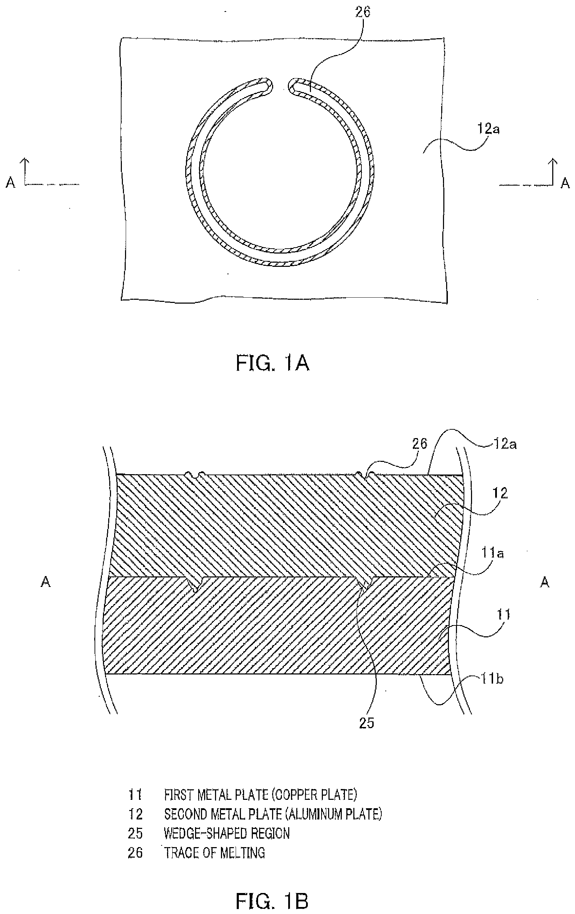

FIG. 1A is a top view of a laser joined component according to Embodiment 1. FIG. 1B is a cross-sectional view of the laser-joined component according to Embodiment 1. As illustrated in FIG. 1B, the laser-joined component according to Embodiment 1 includes first metal plate 11 made of steel and second metal plate 12 made of aluminum having a melting point lower than first metal plate 11 joined on first metal plate 11 by laser. Trace of melting 26 is formed on upper surface 12a of second metal plate 12.

As illustrated in FIG. 1A, trace of melting 26 is preferably formed in a curved line such that the line does not cross over itself. This is because the curved line is more likely to achieve a sufficient strength at the joined part even if joined area of first metal plate 11 and second metal plate 12 is small. More specifically, trace of melting 26 is preferably formed in a circular line as illustrated in FIG. 1A. By shaping trace of melting 26 in a circular line, the joining strength increases since an external force is isotropically applied on the joined part. According to Embodiment 1, the strength joining dissimilar metal plates can be increased.

As illustrated in FIG. 1B, at an interface joining first metal plate 11 and second metal plate 12, wedged region 25 is formed from second metal plate 12 toward the inside of first metal plate 11 through upper surface 11a of first metal plate 11. With wedge-shaped region 25, joining strength of first metal plate 11 and second metal plate 12 increases by an anchoring effect.

It is preferable that the depth of wedge-shaped region 25 from the upper surface of first metal plate 11 is at most 75% of the thickness of first metal plate 11 so as to suppress thermal influence on a part under first metal plate 11. No thermal history (influence of heat) can be seen on lower surface 11b of first metal plate 11. Accordingly, various dissimilar metal plates can be joined without limitation on a component provided under the lower surface of first metal plate 11.

The thickness of second metal plate 12 is not particularly limited as long as stiffness of a structure is secured. However, the thickness is preferably in a range from 0.1 mm to 2.0 mm. If the thickness of second metal plate 12 is smaller than 0.1 mm, it would be difficult to secure the stiffness of the structure. If the thickness of second metal plate 12 exceeds 2.0 mm, when aluminum 24 reaches a boundary of first metal plate 11 and second metal plate 12, a surface temperature of second metal plate 12 irradiated with a laser reaches a boiling point because of a temperature ramp. As a result, rapid evaporation of aluminum of second metal plate 12 occurs, reducing the thickness of second metal plate 12.

A mixed layer is present in the proximity of the interface of wedge-shaped region 25, the mixed layer including the metal composing second metal plate 12 and at least one of the metal composing first metal plate 11 and a metal composing a metal layer formed on the first metal plate 11. Alternatively, a mixed layer is present in the proximity of the interface of the wedge-shaped region, the mixed layer including the metal composing first metal plate 11 and at least one of the metal composing second metal plate 12 and a metal composing a metal layer formed on the second metal plate 12. It is preferable that the mixed layer is composed of a non-equilibrium phase.

### (Manufacturing apparatus)

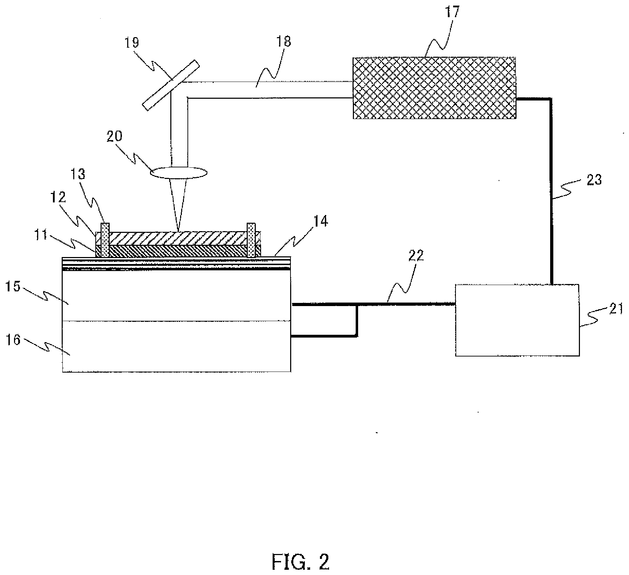

FIG. 2 illustrates a configuration of a laser-joined component and a manufacturing apparatus used in a method for manufacturing the laser-joined component according to Embodiment 1. As illustrated in FIG. 2, the manufacturing apparatus includes Y-axis table 16, X-axis table 15 connected on Y-axis table 16, and fixing plate 14 fixed on X-axis table 15. First metal plate (steel plate) 11, and second metal plate (aluminum plate) 12 are placed on fixing plate 14. First metal plate 11 and second metal plate 12 can be fixed on fixing plate 14 by fixing metal component 13.

The manufacturing apparatus further includes controller 21, YAG laser oscillator 17, mirror reflector 19, and light condensing lens 20. Controller 21 is connected to X-axis table 15 and Y-axis table 16 through signal line 22. Controller 21 is connected to YAG laser oscillator 17 through signal line 23. By sending positioning signals from controller 21 to X-axis table 15 and Y-axis table 16, first metal plate 11 and second metal plate 12 placed on fixing plate 14 may be positioned in the X-axis direction and the Y-axis direction. By changing the relative positions of the laser beam source and second metal plate 12, second metal plate 12 is scanned with the laser.

By controller 21 instructing YAG laser oscillator 17, laser 18 emitted by YAG laser oscillator 17 is shoot. Laser 18 emitted by YAG laser oscillator 17 is angled at 90 degrees by mirror reflector 19, passes through light condensing lens 20, and radiated on second metal plate 12. As a result, first metal plate 11 and second metal plate 12 are joined.

Note that, as a manufacturing apparatus, an apparatus using movement of X-axis table and Y-axis table is used for description. However, a manufacturing apparatus using another scheme may be used as long as the relative positions of the light source of the laser and second metal plate 12 are moved, allowing the scanning of second metal plate 12 with laser 18. For example, the manufacturing apparatus may use flying optics, or a hybrid of moving X-axis and Y-axis tables and the flying optics.

Although not illustrated, controller 21 includes (i) an operation controlling section (ii) an input device for inputting physical property information of first metal plate 11 and second metal plate 12, irradiation condition, and irradiation pattern of laser, (iii) an output device for outputting results of laser irradiation, (iv) a display device for displaying the results of laser irradiation, and (v) a storage device for storing various information for manufacturing a laser-joined component in association with each other, for example, lot numbers, the physical property information of first metal plate 11 and second metal plate 12, the conditions for laser irradiation, and the irradiation patterns, and information regarding property of wedge-shaped region 25 formed by laser irradiation.

As the operation controlling section, an operating device used for a regular computer system such as a CPU may be used. As the input device, a pointing device such as a keyboard or a mouse may be used. As the output device, a printer may be used, for example. As the display device, an image display device such as an LCD display or a monitor may be used, for example. As the storage device, a storage device such as a ROM, a RAM, or a magnetic disk may be used, for example.

### (Method for manufacturing laser-joined component)

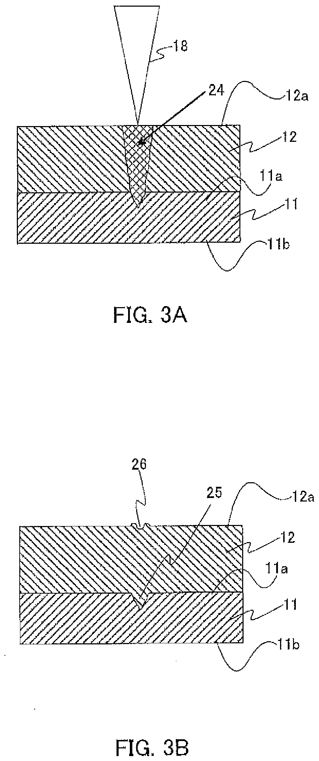

FIG. 3A is a cross-sectional schematic view illustrating laser irradiation in the joining process. FIG. 3B is a schematic view of a solidified state after laser irradiation in the joining process. The method for manufacturing the laser-joined component will be described with reference to FIGS. 3A and 3B.
(i) First, a manufacturing apparatus as illustrated in FIG. 2 is provided. Metal plate 11 made of steel (steel plate) and second metal plate 12 made of aluminum (aluminum plate) having a melting point lower than first metal plate 11 are prepared.
(ii) First metal plate 11 is placed on fixing plate 14, and second metal plate 12 is placed on first metal plate 11. By fixing metal plate 13, first metal plate 11 and second metal plate 12 are fixed on fixing plate 14. Subsequently, physical information on first metal plate 11 and second metal plate 12, irradiation condition and irradiation pattern of laser are input to controller 21. Alternatively, the irradiation condition of laser may be set by reading a predetermined irradiation condition of laser from the storage apparatus.
(iii) The laser irradiation is performed from the side of the upper surface of second metal plate 12. Subsequently, as illustrated in FIG. 3A, aluminum 24 in second metal plate 12 melts from a part irradiated with laser 18 toward first metal plate 11 in the depth direction. First metal plate 11 does not melt at a melting temperature of aluminum. However, if the thermal energy of laser is sufficient to melt a boundary surface of first metal plate 11, a part of upper surface 11a of first metal plate 11 at the interface melts. The melt aluminum 24 engages with first metal plate 11. The metal element of the melted first metal plate 11 is mixed with aluminum in molten state.
(iv) Next, second metal plate 12 is scanned with a laser while forming trace of melting 26 on upper surface 12a of second metal plate 12. More specifically, controller 21 sends signals to X-axis table 15 and Y-axis table 16 for positioning second metal plate 12, while irradiating second metal plate 12 with the laser in the same manner as process (iii). It is preferable that second metal plate 12 is positioned such that the laser irradiation is performed in a curved line and that trace of melting 26 does not cross over itself. When the same part is irradiated with the laser more than once, there is a possibility that the part of second metal plate 12 melts in the part irradiated with the laser more than once, and that wedge-shaped region 25 expands toward the lower surface of first metal plate 11 beyond a necessary depth. More specifically, it is preferable that the laser irradiation makes trace of melting 26 circular. This is because the time necessary for getting back to a starting position of irradiation can be reduced compared to a case where the irradiation is performed in a straight line. In addition, laser irradiation can continue while controller 21 adjusts output of laser irradiated from YAG laser oscillator 17.
   As illustrated in FIG. 3B, at a joining interface of first metal plate 11 and second metal plate 12, wedge-shaped region 25 is formed from the side of second metal plate 12 toward the inside of first metal plate 11 at the part irradiated with the laser. Stated differently, wedge-shaped region 25 remains in first metal plate 11 after melt aluminum 24 is solidified. Trace of melting 26 is formed on the upper surface of second metal plate 12 due to influence of heat by the laser irradiation.
   (v) With the process described above, second metal plate 12 is laser-joined on first metal plate 11.

A laser-joined component can be manufactured without leaving a thermal history (influence of heat) on lower surface 11b of first metal plate 11, according to Embodiment 1. According to Embodiment 1, dissimilar metal plates are joined with high joining strength without restriction on a component provided on lower surface 11b of first metal plate 11. A laser-joined component obtained by joining an aluminum electrode and a battery can be obtained by utilizing the characteristics of Embodiment 1, which will be described later as Example 2.

### (Example of Embodiment 1)

A laser-joined component was manufactured under the following conditions, based on the manufacturing process according to Embodiment 1.

As first metal plate 11, carbon steel having the thickness of 0.3 mm and carbon content of 0.3% was used. As second metal plate 12, an aluminum (Al) plate having the thickness of 0.4 mm and purity of 99.5% was used. The conditions for laser irradiation were as follows: laser output 200 W; irradiation spot diameter 0.15 mm; and scanning speed 30 mm/second.

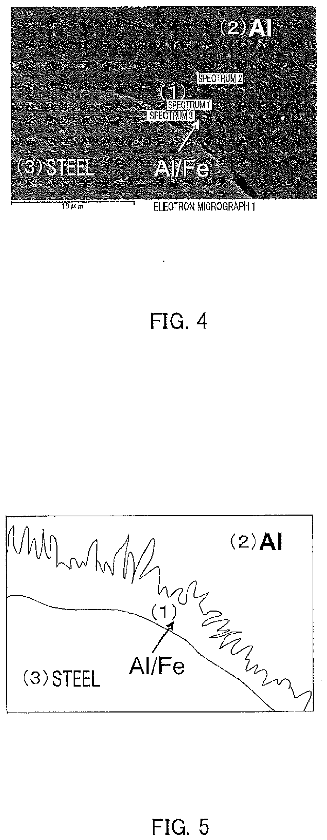

FIG. 4 is a cross-sectional image of an area in the proximity of a joined part of the laser-joined component manufactured in Example. In FIG. 4, a part of the boundary of the two metal plates in the proximity of wedge-shaped region 25 illustrated in FIG. 3B is shown. FIG. 5 is a schematic diagram of a cross-sectional image of a part in the proximity of a joined part of the laser-joined component in Embodiment.

FIG. 4 shows an analysis of an elemental ratio using the X-ray photoelectron spectroscopy. The analysis shows that an elemental ratio (atomic ratio) in the part (1) was A1 = 64 and Fe = 36, that is, a mixed layer of Al: Fe = 1.8 : 1, the part (1) being present in the Al electrode approximately 3 µm from the interface. Based on a phase diagram, the phase is close to an intermetallic compound of FeAl₂. In the part (2), Al is 100 and Fe is 0, and in the part (3), Al is 0 and Fe is 100. In these parts, it is assumed that Al and Fe are not mixed. When the joined component was tension fractured, the fracture occurred in aluminum metal plate.

### (Variation of Embodiment 1)

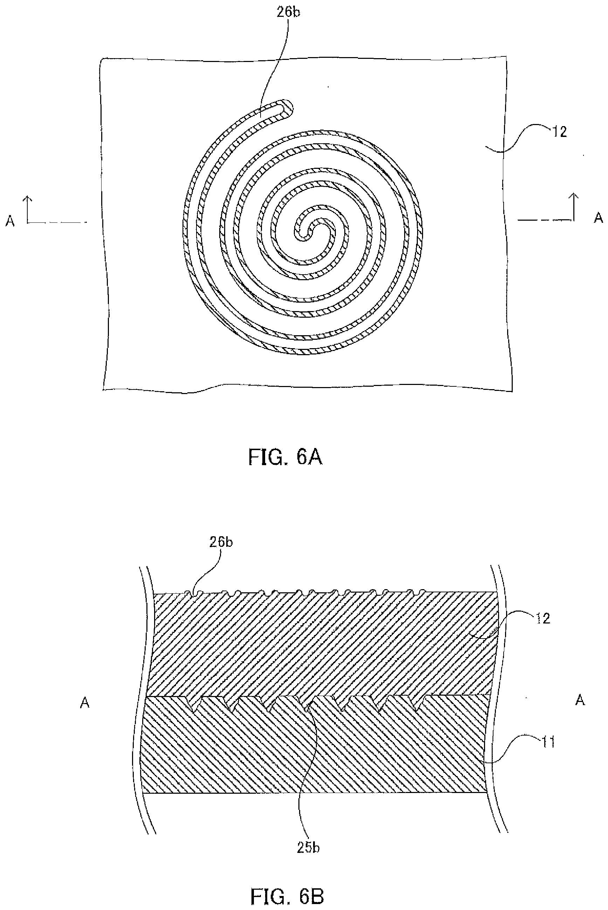

In Embodiment 1, a circular trace of melting is formed. However, the trace of melting is not limited to a circular line, and may be another curved line. For example, spiral (scroll) trace of melting 26b may be formed, as illustrated in FIGS. 6A and 6B. Alternatively, trace of melting 26 may be formed in a wave line.

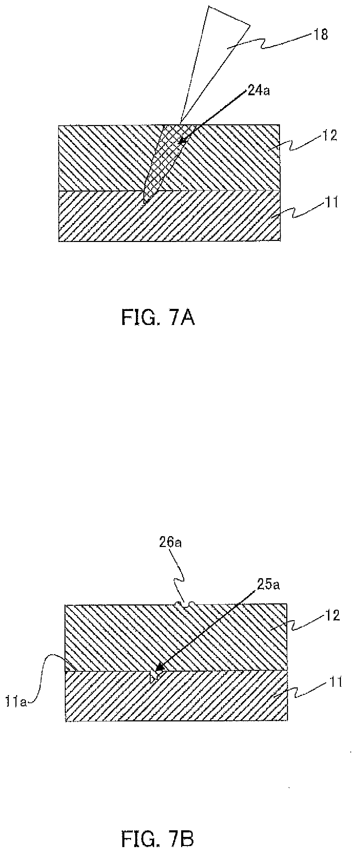

In Embodiment 1, when joining the plates by laser, the upper surface of second metal plate 12 is vertically irradiated with the laser. The wedge-shaped region is formed in the vertical direction from the upper surface toward the lower surface of first metal plate. However, as illustrated in FIG. 7A, when joining the plates using laser, a region of melt aluminum 24a may be formed by irradiating the upper surface of second metal plate 12 with a laser obliquely radiated with the surface of the upper surface of second metal plate 12. And further as illustrated in FIG. 7B, wedge-shaped region 25a may be formed obliquely with respect to upper surface 11a of first metal plate 11.

In Embodiment 1, a metal layer is not provided on first metal plate 11. However, a metal layer may be provided on at least one surface of first metal plate. This is because, providing a nickel plated layer as the metal layer increases bonding strength. The reason for this is that the adding nickel to the melt part reduces the relative ratio of aluminum ratio in the melt part, the aluminum expressing a lower strength. Thereby the strength of bonding improves. It is preferable that the metal layer is provided on a surface of first metal plate, the surface being joined with second metal plate 12. The metal layer can comprise nickel, zinc or tin.

### (Embodiment 2) (Laser-joined component)

The method for joining an aluminum electrode and battery, and a laser-joined component obtained by the joining method will be described as follows as Embodiment 2.

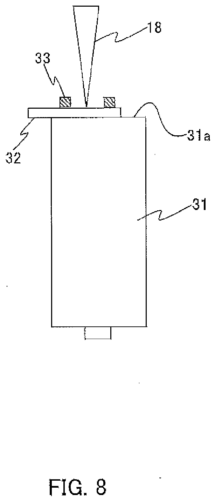

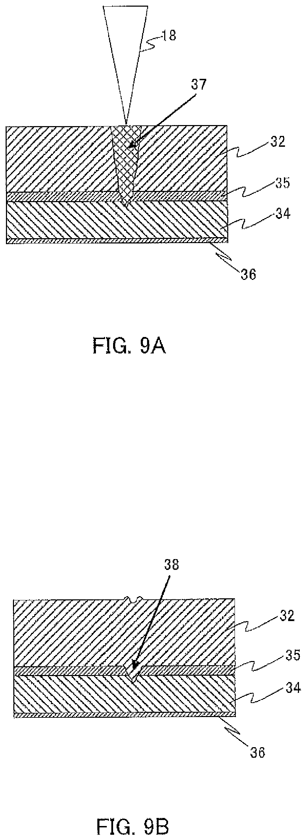

FIG. 8 is a schematic diagram of the laser-joined component and process for manufacturing the laser-joined component (manufacturing apparatus) according to Embodiment 2. FIGS. 9A and 9B show schematic views of a joining process in a method for manufacturing a laser-joined component according to Embodiment 2. As illustrated in FIG. 8, the laser-joined component includes battery 31, aluminum electrode 32 joined (provided) on bottom surface 31a of battery 31. As an external case of battery 31, steel plate 34 having the thickness of 0.3 mm provided with nickel-plated layers 35 and 36 can be used as illustrated in FIG. 9A. The thickness of upper nickel-plated layer 35 may be 3 µm, and the thickness of lower nickel-plated layer 36 may be 0.3µm. The thickness of aluminum electrode 32 can be 0.4 mm.

### (Method for manufacturing laser-joined component)

The method for manufacturing the laser-joined component will be described with reference to FIGS. 9A and 9B.
(i) First, battery 31 and aluminum electrode 32 are provided.
(ii) Subsequently, battery 31 is placed with bottom surface 31a facing upward, as illustrated in FIG. 8.
(iii) Aluminum electrode 32 is placed over bottom surface 31a of battery 31, and aluminum electrode 32 is pressed by fixing jig 33.
(iv) In the same manner as Embodiment 1, aluminum electrode 32 is scanned by irradiation of laser 18. Subsequently, as illustrated in FIG. 9A, the melt part (melt aluminum 37) in aluminum electrode 32 develops from the part irradiated with laser 18 to nickel-plated layer 35 on the surface of steel plate 34.
   Although nickel-plated layer 35 does not melt at the melting temperature of aluminum, when the thermal energy of laser irradiation is sufficiently high, nickel-plated layer 35 at the interface melts, and a part of steel plate 34 melts as well. The metal elements from the melted nickel-plated layer 35 and the melted steel plate 34 are mixed with melted aluminum 37. As illustrated in FIG. 9B, when the laser irradiation ends, melted aluminum 37 is solidified to remain as wedge-shaped region 38 in steel plate 34, the wedge-shaped region 38 penetrating nickel-plated layer 35.
(iv) With the process described above, aluminum electrode 32 is welded to battery 31.

### (Example of Embodiment 2)

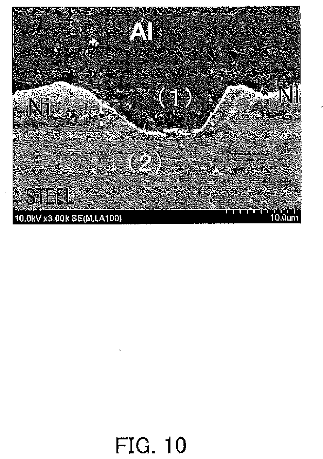

A laser-joined component was manufactured under the following conditions, based on the manufacturing process according to Embodiment 2. The conditions for laser irradiation were as follows: laser output 230 W; irradiation spot diameter 0.15 mm; and scanning speed 60 mm/second. FIG. 10 is a cross-sectional image of an area in the proximity of joined part in the laser-joined component according to Embodiment 2.

As illustrated in FIG. 10, the image demonstrated that a wedge-shaped projection (1) is engaged with the steel plate. Analysis on an elemental ratio in the structure illustrated in FIG. 10 is performed by the X-ray photoelectron spectroscopy. The analysis shows that the elemental ratio (atomic ratio) in the wedged projection (1) at the joining interface was Al = 92, Fe = 0, and Ni = 8. Although projection (1) is assumed to be a layer in which only Al and Ni are mixed, no intermetallic compound of Al-Ni having the Al/Ni ratio was found.

The elemental ratio (atomic ratio) in part (2) in Fig. 10 is Fe = 100, Al = 0, and Ni = 0. Accordingly, it is assumed that no Al is mixed to the steel of the steel plate constituting battery 31.

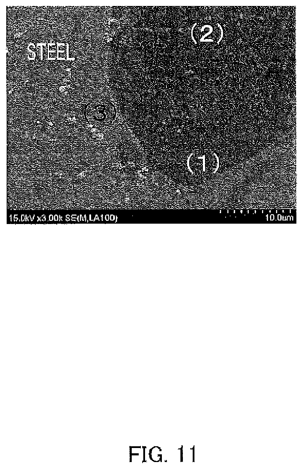

FIG. 11 is a cross-sectional image of a part in the proximity of the joined part in the same sample as in FIG. 10, the part in the sample being different from that of FIG. 10. The elemental ratio (atomic ratio) of wedge-shaped projection (1) in the steel plate side was Al = 70, Fe = 36, and Ni =1. The elemental ratio (atomic ratio) of the part (2) is Al = 95, Fe = 4, and Ni = 1. The elemental ratio (atomic ratio) of the part (3) is Al = 14, Fe = 86, and Ni = 0. With regard to intermetallic compounds corresponding to the atomic ratios, the atomic ratio of the projection (1) is close to FeAl₂. On the other hand, for the part (2) and (3), no corresponding intermetallic compound was found.

In addition, it is known that a general upper threshold of solid-solution of Al in Fe is 50 atm%. This general rule is only applicable to the part (3). Accordingly, at the wedged-shaped part in the proximity of the joined part in FIG. 10 and FIG. 11, a mixed layer is present, the mixed layer including the metal of a low melting point metal member and at least one of the metal of a high melting point metal member and the metal of the metal surface formed on the high melting point metal member. It is assumed that the mixed layer includes at least a non-equilibrium phase, other than an intermetallic compound and an alloy phase.

Even if the layer in the proximity of the interface is composed of the non-equilibrium phase, self-diffusion of the elements barely occurs during approximately 10 years under a use environment of 60°C or lower which is the relatively high-temperature for the usage condition of the battery, and thus the metal composition of the layer barely changes.

### (Reference Example 1)

As Reference Example 1, a laser-joined component was manufactured in the same manner as the Example in Embodiment 2 except that the laser irradiation was performed such that the starting position and the end position of the trace of melting coincide with each other.

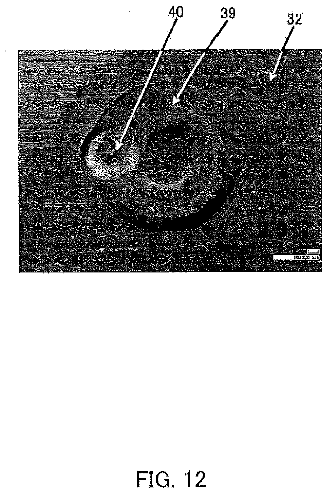

FIG. 12 is an image illustrating the trace of melting formed on the upper surface of the second metal plate of the laser-joined component according to Reference Example 1. As illustrated in FIG. 12, the laser irradiation is performed such that circular trace of melting 39 is formed on aluminum electrode 32. The end position and the starting position of the laser irradiation are denoted as 40. By moving the heated melt part, heat quantity transferring in the depth direction of steel plate 34 reduces, and therefore the influence of heat on the nickel-plated layer 36 reduces.

The reason for the laser irradiation in a circular line is because the time necessary for getting back to a starting position of irradiation can be reduced compared to a case where the irradiation is performed in a straight line. By providing a nickel-plated layer, the joining strength slightly increases compared to a case without a nickel-plated layer. It is assumed that adding nickel to the melt part reduces the relative ratio of aluminum in the melt part, aluminum being low in strength, and thus the joining strength slightly increases.

### (Reference Example 2)

The laser-joined component was manufactured in the same manner as Example in Embodiment 2 except that the laser output was set at 250 W and that nickel-plated layers were provided on the front surface and the back surface of the steel plate.

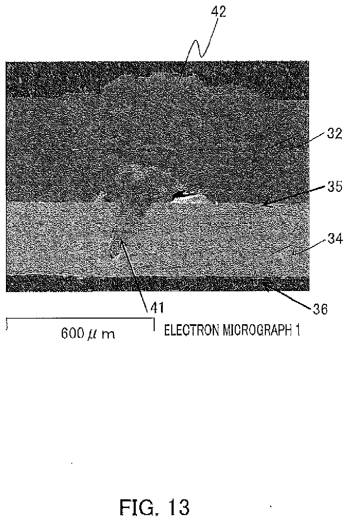

FIG. 13 is a cross-sectional image of a joined part of the laser-joined component manufactured as Reference Example 2. Under the conditions in Reference Example 2, the influence of heat such as burning and peeling of nickel-plating was seen on the lower surface of nickel-plated layer 36. The following is assumed reasons of the influence of heat. The length of wedge-shaped region 41 in thickness developed from aluminum electrode 32 reached 78% of the thickness direction of steel plate 34. As a result, high-temperature melt reached closer to the lower surface of steel plate 34, causing the heat influence of the lower surface as described above. With the description above, it is demonstrated that setting the length of the wedge-shaped projection equal to or less than 75% of the thickness of the steel plate is preferable in order to suppress the influence of heat on the lower surface. In addition, Reference Example 2 demonstrated that the metal elements of steel plate 34 and nickel-plated layer 35 are present in re-solidified part 42, the metal elements also being present in wedge-shaped region 41.

Note that, in Reference Example 2, nickel-plated layers 35 and 36 are provided on the front surface and the back surface of steel plate 34 respectively, the nickel-plated layer may be provided only on the one side of steel plate 34 facing aluminum electrode 32. Alternatively, plating such as zinc, tin or other element may be used as a surface layer for controlling corrosion of steel. This is because a non-equilibrium phase is formed in the proximity of the joined part. Zinc and tin are preferable because they form alloys with aluminum, which makes them more suitable for joining.

### Industrial Applicability

According to the laser-joined component and the manufacturing method thereof according to the present invention, dissimilar metal plates that are overlaid each other having different melting points can be joined by irradiating with laser from the side of the metal having a lower melting point. The increase in the temperature of the lower surface of the metal plate having the higher melting point is restricted. Therefore, the present invention is widely applicable to producing structural components including thin-plates of metal, such as mechanical components and electrode materials.

### Reference Signs List

- 11: First metal plate (steel plate)
- 12: Second metal plate (aluminum plate)
- 18: Laser
- 24, 37: Melt aluminum
- 25, 3 8, 41: Wedge-shaped region
- 26: Trace of melting
- 32: Aluminum electrode
- 34: Steel plate
- 35: Nickel-plated layer

## Claims

1. A laser-joined component comprising:
a first metal plate (11) which is a component of an external case of a battery and is made of steel; and
a second metal plate (12) which is a component of an aluminum electrode of the battery and is made of aluminum having a melting point lower than a melting point of the first metal plate, wherein,
the second metal plate is laser-joined on the first metal plate,
a melting part of an upper surface (11a) of the first metal plate (11) at an interface between the first metal plate (11) and the second metal plate (12) is mixed with the melted aluminum (24, 37) in molten state and the melted aluminum engages with a part of the upper surface (11a) of the first metal plate (11), the melted aluminium in molten state being formed starting from within the upper surface of the second metal plate in depth direction through the second metal plate towards the first metal plate (11) into a wedge shaped region (25) within the upper surface of the first metal plate inside of the first metal plate, and
the second metal plate has a trace of melting (26) on an upper surface thereof.

2. The laser-joined component according to claim 1, wherein the trace of melting (26) is formed in a curved line such that the line does not cross over itself.

3. The laser-joined component according to claim 1, wherein a mixed layer including a metal composing the second metal plate and a metal composing the first metal plate is present in the wedge-shaped region (25) at the proximity of the interface.

4. The laser-joined component according to claim 1, wherein the wedge-shaped region (25) is tilted with respect to the upper surface (1 la) of the first metal plate.

5. The laser-joined component according to claim 1, wherein the first metal plate (11) is provided with a metal layer (35) at least on one surface, and the metal layer is provided on a surface joined with the second metal plate (12).

6. The laser-joined component according to claim 5, wherein the metal layer (35) is made of nickel, zinc or tin.

7. The laser-joined component according to claim 5, wherein a length in a thickness direction of the wedge-shaped region (25) from the upper surface of the first metal plate is 75% or less of a thickness of the first metal plate.

8. The laser-joined component according to claim 1, wherein no thermal history is seen on a lower surface of the first metal plate (11).

9. The laser-joined component according to claim 1, wherein a thickness of the second metal plate (12) is in a range from 0.1 mm to 2.0 mm.

10. The laser-joined component according to claim 4, wherein the mixed layer is composed of a non-equilibrium phase.

11. A method for manufacturing a laser-joined component comprising:
placing a second metal plate (12) on a first metal plate (11), the first metal plate (11) being a component of an external case of a battery and made of steel, the second metal plate being a component of an aluminum electrode of the battery and made of aluminum having a lower melting point than a melting point of the first metal plate; and
joining the second metal plate with the first metal plate by irradiating an upper surface of the second metal plate with a laser, while forming the trace of melting (26) on the upper surface of the second metal plate, wherein
a melting part of an upper surface (11a) of the first metal plate (11) at an interface between the first metal plate and the second metal plate is mixed with the melted aluminum in molten state and the melted aluminum engages with a part of the upper surface of the first metal plate, the melted aluminum (24, 37) in molten state being formed starting from within the upper surface of the second plate (12) in depth direction through the second metal plate (12) towards the first metal plate (11) into a wedge shaped region (25) within the upper surface (11a) of the first metal plate (11) inside of the first metal plate.

12. The method for manufacturing a laser-joined component according to claim 11, wherein when joining the second metal plate (12) with the first metal plate (11), the laser irradiation is performed in a curved line such that the trace of melting does not cross over itself.

13. The method for manufacturing a laser-joined component according to claim 12, wherein when joining the second metal plate (12) with the first metal plate (11), the laser irradiation is performed such that the trace of melting is formed in a circular line.

14. The method for manufacturing a laser-joined component according to claim 11, wherein
when joining the second metal plate (12) with the first metal plate (11) the upper surface of the second metal plate is irradiated with the laser obliquely radiated with respect to the upper surface of the second metal plate.

## Patentansprüche

1. Laserverbundene Komponente, die Folgendes umfasst:
eine erste Metallplatte (11), die eine Komponente eines äußeren Gehäuses einer Batterie ist und aus Stahl hergestellt ist; und
eine zweite Metallplatte (12), die eine Komponente einer Aluminiumelektrode der Batterie ist und aus Aluminium hergestellt ist, das einen Schmelzpunkt aufweist, der niedriger als ein Schmelzpunkt der ersten Metallplatte ist, wobei
die zweite Metallplatte auf der ersten Metallplatte laserverbunden ist,
eine schmelzende Komponente einer oberen Fläche (11a) der ersten Metallplatte (11) an einer Schnittstelle zwischen der ersten Metallplatte (11) und der zweiten Metallplatte (12) mit dem geschmolzenen Aluminium (24, 37) im geschmolzenen Zustand gemischt wird und das geschmolzene Aluminium mit einem Teil der oberen Fläche (11a) der ersten Metallplatte (11) in Eingriff gelangt, wobei das geschmolzene Aluminium im geschmolzenen Zustand beginnend von innerhalb der oberen Fläche der zweiten Metallplatte in Tiefenrichtung durch die zweite Metallplatte zur ersten Metallplatte (11) in einen keilförmigen Bereich (25) innerhalb der oberen Fläche der ersten Metallplatte in das Innere der ersten Metallplatte gebildet wird, und
die zweite Metallplatte auf ihrer oberen Fläche eine Schmelzspur (26) aufweist.

2. Laserverbundene Komponente nach Anspruch 1, wobei die Schmelzspur (26) derart in einer gekrümmten Linie ausgebildet ist, dass sich die Linie nicht selbst schneidet.

3. Laserverbundene Komponente nach Anspruch 1, wobei eine gemischte Schicht, die ein Metall, das die zweite Metallplatte aufbaut, und ein Metall, das die erste Metallplatte aufbaut, enthält, in dem keilförmigen Bereich (25) in der räumlichen Nähe der Schnittstelle vorhanden ist.

4. Laserverbundene Komponente nach Anspruch 1, wobei der keilförmige Bereich (25) in Bezug auf die obere Fläche (11a) der ersten Metallplatte geneigt ist.

5. Laserverbundene Komponente nach Anspruch 1, wobei die erste Metallplatte (11) mindestens auf einer Fläche mit einer Metallschicht (35) versehen ist und die Metallschicht auf einer Fläche vorgesehen ist, die mit der zweiten Metallplatte (12) verbunden ist.

6. Laserverbundene Komponente nach Anspruch 5, wobei die Metallschicht (35) aus Nickel, Zink oder Zinn hergestellt ist.

7. Laserverbundene Komponente nach Anspruch 5, wobei eine Länge in einer Dickenrichtung des keilförmigen Bereichs (25) der oberen Fläche der ersten Metallplatte 75 % oder weniger einer Dicke der ersten Metallplatte beträgt.

8. Laserverbundene Komponente nach Anspruch 1, wobei auf einer unteren Fläche der ersten Metallplatte (11) keine thermische Historie zu sehen ist.

9. Laserverbundene Komponente nach Anspruch 1, wobei eine Dicke der zweiten Metallplatte (12) in einem Bereich von 0,1 mm bis 2,0 mm liegt.

10. Laserverbundene Komponente nach Anspruch 4, wobei die gemischte Schicht aus einer Ungleichgewichtsphase aufgebaut ist.

11. Verfahren zum Herstellen einer laserverbundenen Komponente, das Folgendes umfasst:
Anordnen einer zweiten Metallplatte (12) auf einer ersten Metallplatte (11), wobei die erste Metallplatte (11) eine Komponente eines äußeren Gehäuses einer Batterie und aus Stahl hergestellt ist und die zweite Metallplatte eine Komponente einer Aluminiumelektrode der Batterie und aus Aluminium hergestellt ist, das einen niedrigeren Schmelzpunkt als ein Schmelzpunkt der ersten Metallplatte aufweist; und
Verbinden der zweiten Metallplatte mit der ersten Metallplatte durch Bestrahlen einer oberen Fläche der zweiten Metallplatte mit einem Laser, während die Schmelzspur (26) auf der oberen Fläche der zweiten Metallplatte gebildet wird, wobei
eine schmelzende Komponente einer oberen Fläche (11a) der ersten Metallplatte (11) an einer Schnittstelle zwischen der ersten Metallplatte und der zweiten Metallplatte mit dem geschmolzenen Aluminium im geschmolzenen Zustand gemischt wird und das geschmolzene Aluminium mit einem Teil der oberen Fläche der ersten Metallplatte in Eingriff gelangt, wobei das geschmolzene Aluminium (24, 37) im geschmolzenen Zustand beginnend von innerhalb der oberen Fläche der zweiten Platte (12) in Tiefenrichtung durch die zweite Metallplatte (12) zur ersten Metallplatte (11) in einen keilförmigen Bereich (25) innerhalb der oberen Fläche (11a) der ersten Metallplatte (11) in das Innere der ersten Metallplatte gebildet wird.

12. Verfahren zur Herstellung einer laserverbundenen Komponente nach Anspruch 11, wobei die Laserbestrahlung derart in einer gekrümmten Linie durchgeführt wird, dass sich die Schmelzspur nicht selbst kreuzt, wenn die zweite Metallplatte (12) mit der ersten Metallplatte (11) verbunden wird.

13. Verfahren zur Herstellung einer laserverbundenen Komponente nach Anspruch 12, wobei die Laserbestrahlung derart durchgeführt wird, dass die Schmelzspur in einer kreisförmigen Linie gebildet wird, wenn die zweite Metallplatte (12) mit der ersten Metallplatte (11) verbunden wird.

14. Verfahren zur Herstellung einer laserverbundenen Komponente nach Anspruch 11, wobei die obere Fläche der zweiten Metallplatte bestrahlt wird, wobei der Laser in Bezug auf die obere Fläche der zweiten Metallplatte schräg eingestrahlt wird, wenn die zweite Metallplatte (12) mit der ersten Metallplatte (11) verbunden wird.

## Revendications

1. Composant soudé au laser comprenant :
une première plaque de métal (11) qui constitue un composant d'un boîtier extérieur d'une batterie et est composée d'acier ; et
une seconde plaque de métal (12) qui constitue un composant d'une électrode en aluminium de la batterie et est composée d'aluminium ayant un point de fusion inférieur à un point de fusion de la première plaque de métal, où
la seconde plaque de métal est jointe à la première plaque de métal par soudage au laser,
une partie fondante d'une surface supérieure (11a) de la première plaque de métal (11) au niveau d'une interface entre la première plaque de métal (11) et la seconde plaque de métal (12) se mélange avec l'aluminium fondu (24, 37) à l'état fondu et l'aluminium fondu se lie avec une partie de la surface supérieure (11a) de la première plaque de métal (11), l'aluminium fondu à l'état fondu formant, depuis l'intérieur de la surface supérieure de la seconde plaque de métal, dans la direction de sa profondeur, à travers la seconde plaque de métal, en direction de la première plaque de métal (11), une région en forme de coin (25) formée à l'intérieur de la surface supérieure de la première plaque de métal à l'intérieur de la première plaque de métal, et
la seconde plaque de métal ayant une trace de fusion (26) sur sa surface supérieure.

2. Composant soudé au laser selon la revendication 1, où la trace de fusion (26) a la forme d'une ligne courbe qui ne se recoupe pas.

3. Composant soudé au laser selon la revendication 1, où une couche mélangée incluant un métal composant la seconde plaque de métal et un métal composant la première plaque de métal est présente dans la région en forme de coin (25) à proximité de l'interface.

4. Composant soudé au laser selon la revendication 1, où la région en forme de coin (25) est inclinée par rapport à la surface supérieure (11a) de la première plaque de métal.

5. Composant soudé au laser selon la revendication 1, où la première plaque de métal (11) est pourvue d'une couche de métal (35) sur au moins une surface et la couche de métal est prévue sur une surface soudée à la seconde plaque de métal (12).

6. Composant soudé au laser selon la revendication 5, où la couche de métal (35) est composée de nickel, de zinc ou d'étain.

7. Composant soudé au laser selon la revendication 5, où une longueur, dans la direction de l'épaisseur, de la région en forme de coin (25) à partir de la surface supérieure de la première plaque de métal représente 75% ou moins d'une épaisseur de la première plaque de métal.

8. Composant soudé au laser selon la revendication 1, où aucun historique thermique n'est visible sur une surface inférieure de la première plaque de métal (11).

9. Composant soudé au laser selon la revendication 1, où une épaisseur de la seconde plaque de métal (12) est comprise entre 0,1 mm et 2,0 mm.

10. Composant soudé au laser selon la revendication 4, où la couche mélangée est composée d'une phase en déséquilibre.

11. Procédé pour fabriquer un composant soudé au laser comprenant les étapes consistant à :
placer une seconde plaque de métal (12) sur une première plaque de métal (11), la première plaque de métal (11) constituant un composant d'un boîtier extérieur d'une batterie et étant composée d'acier, la seconde plaque de métal constituant un composant d'une électrode en aluminium de la batterie et étant composée d'aluminium ayant un point de fusion inférieur à un point de fusion de la première plaque de métal ; et
souder la seconde plaque de métal à la première plaque de métal en irradiant une surface supérieure de la seconde plaque de métal avec un laser, tout en formant la trace de fusion (26) sur la surface supérieure de la seconde plaque de métal, où
une partie fondante d'une surface supérieure (1 la) de la première plaque de métal (11) au niveau d'une interface entre la première plaque de métal et la seconde plaque de métal est mélangée avec l'aluminium fondu à l'état fondu et l'aluminium fondu se lie avec une partie de la surface supérieure (11a) de la première plaque de métal, l'aluminium fondu (24, 37) à l'état fondu formant, depuis l'intérieur de la surface supérieure de la seconde plaque (12), dans la direction de sa profondeur, à travers la seconde plaque de métal (12), en direction de la première plaque de métal (11), une région en forme de coin (25) formée à l'intérieur de la surface supérieure (11a) de la première plaque de métal (11) à l'intérieur de la première plaque de métal.

12. Procédé pour fabriquer un composant soudé au laser selon la revendication 11,
où lors du soudage de la seconde plaque de métal (12) avec la première plaque de métal (11), l'irradiation au laser est effectuée selon une ligne courbe de telle manière que la trace de soudure ne se recoupe pas.

13. Procédé pour fabriquer un composant soudé au laser selon la revendication 12,
où, lors du soudage de la seconde plaque de métal (12) avec la première plaque de métal (11), l'irradiation au laser est effectuée de telle manière que la trace de fusion prend la forme d'une ligne circulaire.

14. Procédé pour fabriquer un composant soudé au laser selon la revendication 11,
où, lors du soudage de la seconde plaque de métal (12) avec la première plaque de métal (11), la surface supérieure de la seconde plaque de métal est irradiée au laser de manière oblique par rapport à la surface supérieure de la seconde plaque de métal.
